# EUROPEAN PATENT SPECIFICATION

(11) **EP 2 652 999 B1**
(45) Date of publication and mention of the grant of the patent: **20.02.2019**
(21) Application number: 10860792.0
(22) Date of filing: 16.12.2010
(51) Int. Cl.: H04W 72/04

(54) **QUASI-ORTHOGONAL FUNCTIONAL WALSH CODE ALLOCATION DEVICES AND METHODS**
VORRICHTUNGEN UND VERFAHREN FÜR DIE ZUWEISUNG VON FUNKTIONELLEN QUASI-ORTHOGONALEN WALSH-CODES
DISPOSITIFS ET PROCÉDÉS D'ATTRIBUTION DE CODES DE WALSH FONCTIONNELS QUASI-ORTHOGONAUX

(43) Date of publication of application: 23.10.2013
(73) Proprietor: Telefonaktiebolaget LM Ericsson (publ), 164 83 Stockholm (SE)
(72) Inventor: SUN, Qian, Guangdong 510230 (CN)
(74) Representative: Ericsson
(86) International application number: PCT/CN2010/002052
(87) International publication number: WO 2012/079198

(56) References cited:
- EP-A2- 1 931 089
- CN-A- 101 801 037
- US-A1- 2004 160 920
- US-B1- 6 831 909
- MANZOLI U ET AL: "Allocation Policies of Quasi-Orthogonal codes on the Forward Link of a Multicarrier DS-CDMA System", IEEE TRANSACTIONS ON WIRELESS COMMUNICATIONS, IEEE SERVICE CENTER, PISCATAWAY, NJ, US, vol. 5, no. 2, 1 February 2006 (2006-02-01), pages 280-282, XP001545714, ISSN: 1536-1276, DOI: 10.1109/TWC.2006.02005
- TSAI S ET AL: "ALLOCATION OF WALSH CODES AND QUASI-ORTHOGONAL FUNCTIONS IN CDMA2000 FORWARD LINK", IEEE 54TH VEHICULAR TECHNOLOGY CONFERENCE. VTC FALL 2001. PROCEEDINGS 7-11 OCT. 2001 ATLANTIC CITY, NJ, USA; [IEEE VEHICULAR TECHNOLGY CONFERENCE], IEEE, IEEE 54TH VEHICULAR TECHNOLOGY CONFERENCE. VTC FALL 2001. PROCEEDINGS (CAT. NO.01CH37211) IEEE P, vol. CONF. 54, 7 October 2001 (2001-10-07) , pages 747-751, XP001124245, DOI: 10.1109/VTC.2001.956870 ISBN: 978-0-7803-7005-0

## Description

### TECHNICAL FIELD

The present invention generally relates to methods and devices configured to allocate Walsh codes and quasi-orthogonal functional Walsh codes to mobile terminals.

### BACKGROUND

In CDMA systems, a plurality of spread-spectrum signals are transmitted simultaneously in the same frequency band, both on forward links from base stations to mobile terminals and on reverse links from the mobile terminals to the base stations. Conventionally, each mobile terminal is assigned a distinct code (e.g., a Walsh code) that identifies the signals sent to, or received from the base station. The mobile terminal receives composite signals having composite spread spectra within the shared frequency band, the composite signals including signals intended for all serviced mobile terminals. Using the assigned code, the mobile terminal selects the signal intended for the mobile terminal from the composite signal.

Preferably, the assigned codes are orthogonal codes such as the Walsh codes. However, in a CDMA 1x Advanced system, in addition to the Walsh codes, Quasi-Orthogonal Functional (QoF) Walsh codes may also be assigned to mobile stations for base band signal spreading. One Walsh code set and four QoF code sets are defined in IS2000. Each of these sets has 128 Walsh or QoF codes of 128 bits length. A user device may be assigned a Walsh code or a QoF code.

In existing CDMA 1xRTT systems, a Walsh code allocation algorithm is implemented in a base transceiver station (BTS) or a base controller station (BCS), allowing a BTS to support up to 35 EVRC users and 46 EVRC-B users in one carrier-sector. In these systems, the number of user devices that can be served is limited by the forward power, so that the 128 Walsh codes are sufficient for the maximum number of possible users. QoF codes are not used and, therefore, a QoF code allocation algorithm has not been implemented in either BTS or BSC.

A reason for which the QoF codes have not been used in radio communication industry until recently is that, when the mobile terminal uses a QoF code to select the signal intended for the mobile terminal from the composite signal, a significant non-orthogonal interference occurs. Therefore, the mobile terminal using a QoF code experiences a significantly higher interference than mobiles using a Walsh code, and the higher interference impacts the service quality.

In the recently developed CDMA 2000 1x Advanced systems, the number of user devices that can be served by a base stations has increased by about three times compared to the CDMA 1xRTT systems. As a result the Walsh codes are no longer enough and allocating QoF Wash codes has become necessary. Meanwhile, new mobiles can support Advance Quasi-Linear Interference Cancelation (AQLIC) which maximally cancels the non-orthogonal interference, thereby alleviating the problem of the service quality loss when the mobile terminal uses a QoF code to select the signal intended for the mobile terminal from the composite signal. Therefore, code allocation algorithms allocating both Walsh codes and QoF codes have been proposed.

However, the currently proposed code allocation algorithms allocating both Walsh codes and QoF codes have turned out to have significant drawbacks as explained below.

According to one currently proposed code allocation algorithm, a Walsh code and a QoF code are alternatively allocated. When using this algorithm, although the interference experienced by the mobile terminals is about the same, the total interference is highest.

According to another currently proposed code allocation algorithm, QoF codes are allocated only after all the Walsh codes have been allocated. When using this algorithm, although the total interference is minimal and has less impact on the control channels, the mobile terminal which is first allocated a QoF code experiences a very high interference (i.e., non-orthogonal interference from signals intended to more than 100 user devices of Walsh codes).

Another currently proposed code allocation algorithm allocates alternatively 2^{m} (e.g., m=5, 2^{m}=32) Walsh codes, and 2^{m} QoF codes. Although the performance of this approach falls in-between the previously described algorithms in terms of total interference, it is still arbitrary, without implementing a strategy to optimize quality of service for the users.

Another possible code allocation algorithm allocates QoF codes to mobile terminals that are closer to the BTS, and, thus, require less power. Although theoretically this algorithm seems optimal, in practice, at the time when a communication is setup, no information about the terminal position is available. Additionally, the user devices may move relative to the base station and then the initially allocated code would have to be changed when the power needs for a user device change (increase or decrease). Therefore, a code allocation based on distance from the base station is not yet used.
Further, US 6 831 909 B1, 14 December 2004 relates to a communication device and a method in a CDMA communication system in which a base station uses a dedicated channel in a current use in order to send setup information about assigning another dedicated channel to a mobile stations, when the mobile station requests assignment of another dedicated channel while in conversation state.
EP 1 931 089 A1, 11 June 2008 describes a radio communication apparatus used in a radio communicaticn system configured to implement a frequency division multiple access method as a modulation method and to divide each cell into at least one inner region and an outer region and to allocate a perfectly-orthogonal channel as a subchannel available in the outer region and to allocate a quasi-orthogonal channel as a subchannel available in the inner region.
Manzoli U et al.: "Allocation Policies of Quasi-Orthogonal codes on the Forward Link of a Multicarrier DS-CDMA System", IEEE Transactions on wireless communications, vol. 5, no. 2, pages 280-282, 01 February 2006 relates to alternative code assignment policies for the forward link.
Tsai S et al.: "Allocation of Walsh codes and quasi-orthogonal functions in CDMA2000 forward link", IEEE 54th Vehicular technology conference proceedings 7-11 October 2001, vol. CONF. 54, 07 October 2001, pages 747-751, relates to a method for allocating Walsh codes and quasi-orthogonal functions. The link performance requirement, the geometry and the activity factor for all mobile stations are incorporated when estimating the sector transmit power for any givel code allocation scheme.

Accordingly, it would be desirable to provide methods and devices configured to allocate Walsh codes and quasi-orthogonal functional Walsh code in the context of CDMA (Code Division Multiple Access) 1x Advance, that avoid the afore-described problems and drawbacks.

### SUMMARY

This is achieved by the subject-matter defined in the independent claims. Advantageous embodiments are defined in the dependent claims.
Methods and devices configured to allocate Walsh codes and quasi-orthogonal functional Walsh codes to mobile terminals take into consideration the number of Walsh codes in use and whether a mobile terminal to which a code is to be allocated is a mobile station capable to perform Advanced Quasi-Linear Interference Cancelation (AQLIC).

According to one exemplary embodiment, a method for allocating orthogonal codes and quasi-orthogonal codes to first user devices and second user devices to enable extracting an intended signal among a plurality of signals multiplexed over the same physical channel is provided. The method includes determining a threshold number of orthogonal codes to be reserved for allocation to first user devices, based on (i) a number of orthogonal codes usable for allocating, (ii) a usage of the orthogonal codes, and (iii) an average penetration of first user devices. The first user devices are less capable than the second user devices to cancel undesirable interference from a signal extracted using the allocated code. The method further includes allocating an orthogonal code to a first user device or a second user device that requests a connection if a number of available orthogonal codes is larger than the threshold number. If the number of available orthogonal codes is not larger than the threshold number, allocating an orthogonal code if a first user device requests a connection, and allocating a quasi-orthogonal code to a second user device that requests a connection.

According to another exemplary embodiment, a computer readable medium storing executable codes which, when executed on a computer, perform a method for allocating orthogonal codes and quasi-orthogonal codes to first and second user devices to enable extracting an intended signal among a plurality of signals multiplexed over the same physical channel is provided. The method includes determining a threshold number of orthogonal codes to be reserved for allocation to first user devices, based on (i) a number of orthogonal codes usable for allocating, (ii) a usage of the orthogonal codes, and (iii) an average penetration of first user devices, the first user devices being less capable than the second user devices to cancel undesirable interference from a signal extracted using the allocated code. The method further includes if a number of available orthogonal codes is larger than the threshold number, allocating an orthogonal code to a first user device or a second user device that requests a connection. If the number of available orthogonal codes is not larger than the threshold number, allocating an orthogonal code if a first user device requests a connection, and allocating a quasi-orthogonal code to a second user device that requests a connection.

According to another embodiment, a base station connectable to first user devices and second user devices configured to extract an intended signal among a plurality of signals multiplexed over the same physical channel, the first user devices being less capable than the second user devices to cancel undesirable interferences from a signal extracted using the allocated code is provided. The base station includes an interface and a processing unit. The interface is configured to receive a connection request from one of the first user devices or the second user devices, to send a signal upon receiving the connection request, to receive an allocated orthogonal code or quasi-orthogonal code, and to transmit the allocated orthogonal code or quasi-orthogonal code to the one of the first user devices or the second user devices. The processing unit is configured to receive the signal from the interface and to determine a threshold number of orthogonal codes to be reserved for allocation to first user devices, based on (i) a number of orthogonal codes currently usable for allocating, (ii) a usage of the orthogonal codes, and (iii) an average penetration of first users. The processing unit is further configured to allocate (a) an orthogonal code to the one of the first user devices and second user devices that sent the connection request if a number of available orthogonal codes is larger than the threshold number, (b) an orthogonal code to the one of the first user devices and second user devices that sent the connection request, if the one of the first user devices and second user devices that sent the connection request is a first user device, there is an orthogonal code currently not allocated, and the number of available orthogonal codes is smaller than or equal to the threshold number, and (c) a quasi-orthogonal code to the one of the first user devices and second user devices that sent the connection request, if the one of the first user devices and second user devices that sent the connection request is a second user device and the number of available orthogonal codes is smaller than or equal to the threshold number. The processing unit is also configured to transmit the allocated orthogonal code or quasi-orthogonal code to the interface.

According to another exemplary embodiment a base station controller connected to at least one base station serving first user devices and second user devices configured to extract an intended signal among a plurality of signals multiplexed over the same physical channel, the first user devices being less capable than the second user devices to cancel undesirable interferences from a signal extracted using the allocated code is provided. The base station controller includes an interface and a processing unit. The interface is configured to receive information about a connection request received by the at least one base station from one of the first user devices or the second user devices, to send a signal related to the at least one base station upon receiving the information, to receive an allocated orthogonal code or quasi-orthogonal code related to the base station, and to transmit the allocated orthogonal code or a quasi-orthogonal code to the at least one base station for the one of the first user devices or the second users devices. The processing unit is configured to receive the signal related to the at least one base station, from the interface, and to determine, relative to the at least one base station, a threshold number of orthogonal codes to be reserved for allocation to first user devices, based on (i) a number of orthogonal codes currently usable for allocating, (ii) a usage of the orthogonal codes, and (iii) an average penetration of first users. The processing unit is further configured to allocate (a) an orthogonal code for the one of the first user devices and second user devices if a number of available orthogonal codes is larger than the threshold number, (b) an orthogonal code for the one of the first user devices and second user devices, if the one of the first user devices and second user devices is a first user device and the number of available orthogonal codes is smaller than or equal to the threshold number, and (c) a quasi-orthogonal code for the one of the first user devices and second user devices, if the one of the first user devices and second user devices is a second user device and the number of available orthogonal codes is smaller than or equal to the threshold number. The processing unit is also configured to transmit the allocated orthogonal code or quasi-orthogonal code to the interface for being transmitted to the at least one base station.

It is an object to overcome some of the deficiencies discussed in the previous section and to provide methods and devices allocating codes to user devices having different capabilities of removing undesired interferences in a simple and efficient manner. One or more of the independent claims advantageously provides an environment that serves better user devices with lower capabilities of removing undesired interferences from a signal extracted using an allocating code, while optimizing the interference level for all the channels.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a communication system according to an exemplary embodiment;
Figure 2 is a flow chart of a method for allocating Walsh codes and QoF codes to AQLIC and non-AQLIC capable mobile terminals, according to an embodiment;
Figure 3 is a schematic diagram of a base station according to an exemplary embodiment;
Figure 4 is a schematic diagram of a base station controller according to an exemplary embodiment;
Figure 5 is a graph illustrating results of applying a method according to an exemplary embodiment;
Figure 6 is another graph illustrating results of applying a method according to an exemplary embodiment;
Figure 7 is another graph illustrating results of applying a method according to an exemplary embodiment; and
Figure 8 is another graph illustrating results of applying a method according to an exemplary embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a CDMA communication system. However, the embodiments to be discussed next are not limited to these systems but may be applied to other systems.

The present invention is defined by the appended claims. Reference throughout the specification to "one embodiment" or "an embodiment" means that a particular feature, structure, or characteristic described in connection with an embodiment is included in at least one embodiment of the present invention which is defined by the appended claims. Thus, the appearance of the phrases "in one embodiment" or "in an embodiment" in various places throughout the specification is not necessarily all referring to the same embodiment. Further, the particular features, structures or characteristics may be combined in any suitable manner in one or more embodiments.

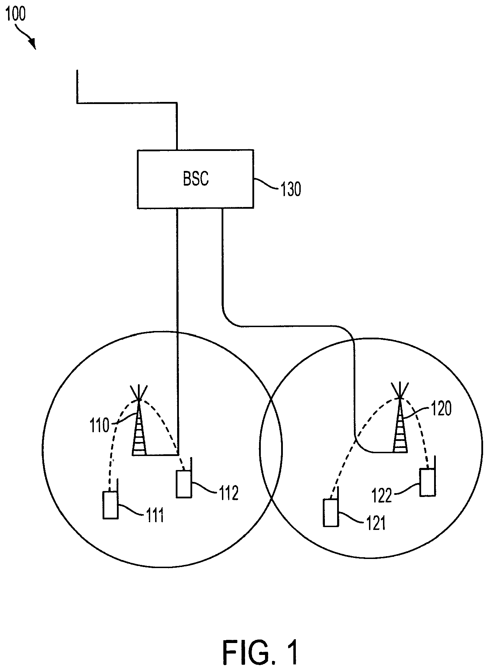

According to an exemplary embodiment illustrated in Figure 1, there is a communication system 100 using CDMA as its access methodology. That is, actors in the system 100 use a spread-spectrum technology (in which a signal generated in a particular bandwidth is deliberately spread in the frequency domain, resulting in a signal with a wider bandwidth) and a coding scheme where each transmitter is assigned a code to allow multiple user devices to be multiplexed over the same physical channel. The actors in the system 100 are base stations 110 and 120, and mobile stations 111, 112, 121, and 122. The base stations 110 and 120 are controlled by a base station controller (BSC) 130. Figure 1 illustrates only two base stations 110 and 120 connected to the BSC 130. However, the two base stations are an illustration and not a limitation, the BSC 130 likely being connected to more than two base stations. Similarly, Figure 1 illustrates two user devices (i.e., mobile stations) connected to each of the base stations 110 and 120. However, the two user devices are merely an illustration and not a limitation, each of the base stations being capable to serve more than two user devices and the number of connected user devices is not necessarily the same for different base stations.

The allocated codes may be orthogonal codes and quasi-orthogonal codes, wherein extracting a signal using a quasi-orthogonal code yields a lower intended signal to unintended interferences ratio. For example, the orthogonal codes may be Walsh codes and the quasi-orthogonal codes may be quasi-orthogonal functional (QoF) Walsh codes. Although the following description refers to Walsh codes and QoF codes, these codes are an illustration and not a limitation of orthogonal codes and quasi-orthogonal codes.

The code allocation for user devices (e.g., mobile stations) of a base station may be performed in the base station (e.g., 110 and 120), for example, by a base station transceiver subsystem (BTS), by a processing unit. Alternatively, the BSC 130 may be configured to perform the code allocation for one or more base stations connected to the BSC 130. Some of the mobile terminals 111, 112, 121, and 122 may be capable to perform Advanced Quasi-Linear Interference Cancelation (AQLIC), while others may not be capable to perform AQLIC. The AQLIC capable mobile stations can maximally cancel non-orthogonal interference. In the following description AQLIC capable mobile station(s) and non-AQLIC capable mobile stations terminology is used for illustration and not of limitation. In other words, the following devices and methods are usable when user devices (mobile terminals) can be classified into first user devices and second user devices, the first user devices being less capable than the second user devices to cancel undesirable interference from a signal extracted using the allocated code.

In some embodiments, allocating Walsh codes and QoF codes is based on a strategy outlined in the following three rules. (1) Control channels are allocated Walsh codes. (2) When the number of unallocated Walsh codes is sufficient (e.g., greater than a threshold number), Walsh codes are allocated to both AQLIC capable mobiles and non-AQLIC capable mobiles. (3) When the number of unallocated Walsh codes in not larger than the threshold number, QoF codes are allocated to AQLIC capable mobile stations and Walsh codes (as long as still available) are allocated to non-AQLIC capable mobile stations.

Rule (2) has the objective to cause, when possible, less interference for the signals transmitted via the control channels. Combining rules (2) and (3) may be summarized as reserving a number of Walsh codes for non-AQLIC capable mobiles.

The number of Walsh codes reserved for non-AQLIC capable mobiles is a feature of exemplary embodiments which leads to the superior performance of this algorithm. Reserving more or fewer Walsh codes than necessary results in a higher total interference. Additionally, if the number of Walsh codes reserved is less than necessary, QoF codes are allocated to more non-AQLIC capable mobile terminals, which leads to poorer service quality for more non-AQLIC capable mobile terminals. Thus, establishing an appropriate threshold for rules (2) and (3) is a significant feature of these embodiments.

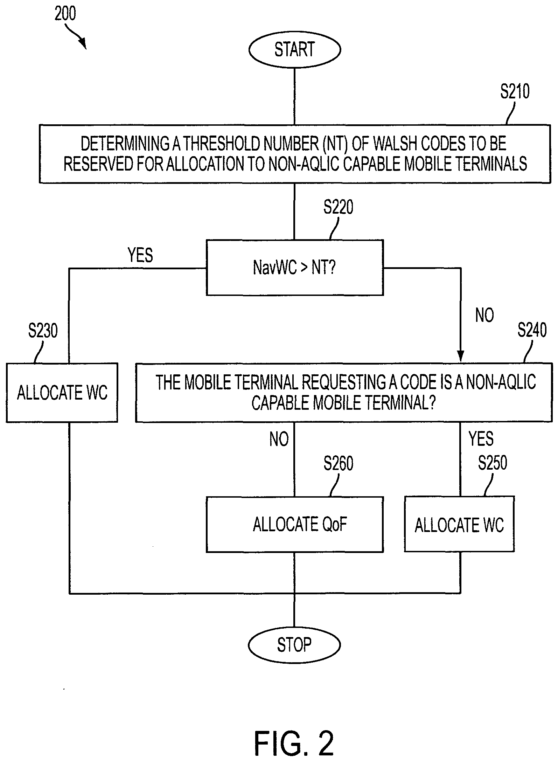

A flow chart of a method 200 for allocating Walsh codes and QoF codes to non-AQLIC capable mobile terminals and to AQLIC capable mobile terminals in order to enable the mobile terminals to extract an intended signal among a plurality of signals multiplexed over the same physical channel (e.g., CDMA), according to an embodiment is illustrated in Figure 2. The method 200 includes determining a threshold number of Walsh codes to be reserved for allocation to non-AQLIC capable mobile terminals, at S210. The threshold number is determined, for example, based on a number of Walsh codes usable for allocating, a usage of the Walsh codes, and an average penetration of non-AQLIC capable mobile terminals.

The method 200 further includes determining whether a number of available Walsh codes (NavWC) is larger than the threshold number, at S220. If the number of available Walsh codes is larger than the threshold number, at S230, a Walsh code is allocated to a non-AQLIC capable mobile terminal or an AQLIC capable mobile terminal that requests a connection.

If the number of available Walsh codes is not larger than the threshold number, it is determined whether the mobile terminal requesting a connection is a non-AQLIC capable mobile terminal, at S240. If the mobile terminal requiring a connection is a non-AQLIC capable mobile terminal, and there are Walsh codes available, a Walsh code is allocated at S250. If the mobile terminal requiring a code is not a non-AQLIC capable mobile terminal, that is, it is an AQLIC capable mobile terminal, a QoF code is allocated at S260.

The method 200 may further include allocating Walsh codes to control channels. The threshold number may be determined each time a mobile terminal requests a connection.

A current penetration (CP) of non-AQLIC capable mobile terminals for an incoming call N may be calculated as CP(N)=(NWC1+NQoF1)/(NWC+NQoF), where NWC1 is the number of Walsh codes currently used by non-AQLIC capable mobile terminals, NQoF1 is the number of QoF codes currently used by non-AQLIC capable mobile terminals, NWC is the number of Walsh codes currently used by non-AQLIC capable and AQLIC capable mobile terminals, and NQoF is the number of QoF codes currently used by non-AQLIC capable and AQLIC capable mobile terminals.

The average penetration of non-AQLIC capable mobile terminals, P_ave(N), may be calculated as a weighted average of the current penetration of non-AQLIC capable mobile terminals CP(N) and a previous average penetration of non-AQLIC capable mobile terminals P_ave(N-1). The previous average penetration of non-AQLIC capable mobile terminals P_ave(N-1) may be the current average penetration of non-AQLIC capable mobile terminals calculated when, a non-AQLIC capable mobile terminal or an AQLIC capable user device has previously requested a connection. If N=0, the previous penetration of non-AQLIC capable mobile terminals may be considered equal to the current penetration of non-AQLIC capable mobile terminals, or in other words, if N=0, the average penetration is equal to the current penetration.

Thus, the average penetration of non-AQLIC capable mobile terminals may be calculated as P_ave(N)=CP(N)×(1-α)+P_ave(N-1)×α, where a<1. For example, the value of α may be 0.33.

The usage of Walsh codes (WCUsage) may be calculated as a ratio of the number of Walsh codes currently used by non-AQLIC capable mobile terminals (NWC1) and the number of Walsh codes currently used by AQLIC capable mobile terminals (NWC2), and the total number of Walsh codes usable for allocation (TotalWCTraffic): (NWC1+NWC2)/TotalWCTraffic (i.e., for the traffic channel), which may be 115.

In order to reserve enough Walsh codes for non-AQLIC capable mobile terminals connecting to the system in the future, preferably, at least the same proportion of the available Walsh codes as the proportion of Walsh codes from the currently used Walsh codes are reserved. On average, among the currently used Walsh codes, the non-AQLIC capable mobile terminals have been allocated TotalWCForTraffic × WCUsage × P_ave(N). Among available Walsh codes TotalWCForTraffic × (1-WCUsage) at least the same proportion P_ave(N) is reserved for non_AQLlC mobile terminals according to this exemplary embodiment.

However, TotalWCForTraffic × (1-WCUsage) × P_ave(N) is merely a minimum number of Walsh codes to be reserved for non AQLIC mobile terminals for one exemplary embodiment. In order to enhance the likelihood to avoid allocating QoF codes to non-AQLIC capable mobile terminals, a variance may be added to this minimum number. The variance Var may be calculated as Var=TotalWCForTraffic × 50% × WCUsage × P_ave(N), which represents a half of Walsh codes that has already been used by the non_AQLlC capable mobile terminals. This manner of calculating the variance is based on the fact that considering a Poisson distribution, the variance equals a traffic arrival rate. Here, the non-AQLIC capable mobile terminals traffic arrival rate is TotalWCForTraffic × WCUsage × P_ave(N). However, in one embodiment, only a half of this variance is covered (i.e. from average to upper bound of the Poisson distribution), therefore, the quantity included in number of Walsh codes used by non-AQLIC capable mobile terminals is the variance multiplied with 50% (i.e., 0.5). In other embodiments, a different fraction of the variance included in number of Walsh codes used by non-AQLIC capable mobile terminals, the half being merely a recommended value. In fact, this fraction may be a configurable variable. The fraction may be set to a value larger than 50% if, in a more conservative approach, it is desired to lower the likelihood that a QoF code is allocated to a non-AQLIC capable mobile terminal.

To summarize the above described calculations, the threshold number of Walsh codes to be reserved for non-AQLIC capable mobile stations, NT= TotalWCForTraffic × (1-WCUsage) × P_ave(N)+ TotalWCForTraffic × 50% × WCUsage × P_ave(N). The value of NT is rounded to the closest lower integer.

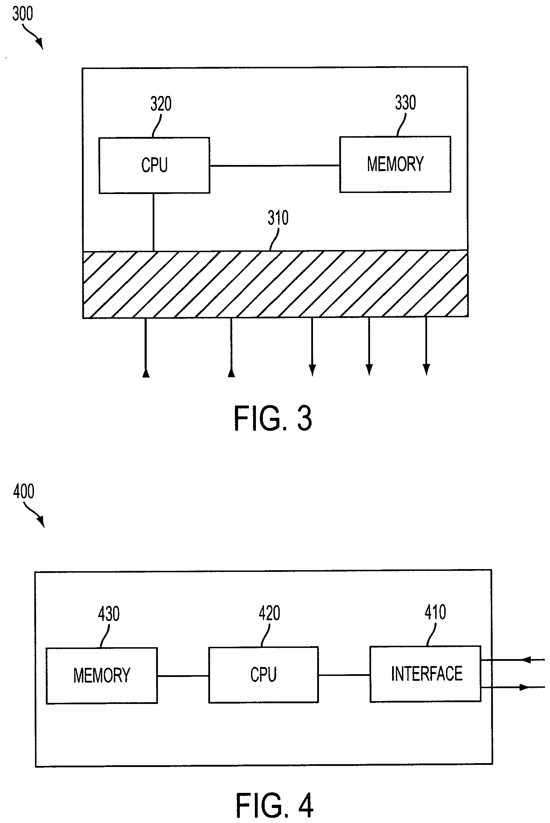

A base station (or base transceiver station) 300 capable to perform the method 200 is illustrated in Figure 3. The base station 300 includes an interface 310, a processing unit 320, and a memory 330.

The interface 310 is configured to receive a connection (e.g., call) request from a user, to send a signal to the processing unit 320 upon receiving the connection request, to receive an allocated code from the processing unit 320, and to transmit the allocated code to the user device that submitted the connection request.

The processing unit 320 is configured to receive the signal from the interface, to perform the method 200 thereby allocating a code for the user device that sent the connection request, and to transmit the allocated code to the interface 310. The processing unit 320 is connected to the memory 330 which may store executable codes that enable the processing unit 320 to perform the method 200.

A base station controller 400 capable to perform the method 200 is illustrated in Figure 4. The base station controller 400 includes an interface 410, a processing unit 420, and a memory 430.

The interface 410 is configured to receive information about a connection request received by a base station from a user, to send a signal to the processing unit 420 upon receiving the information, to receive an allocated code from the processing unit 420, and to transmit the allocated code to the base station for a user device that submitted the connection request to the base station.

The processing unit 420 is configured to receive the signal from the interface, to perform the method 200 thereby allocating a code for the user device that sent the connection request, and to transmit the allocated code to the interface 410. The processing unit 420 is connected to the memory 430 which may store executable codes that enable the processing unit 420 to perform the method 200.

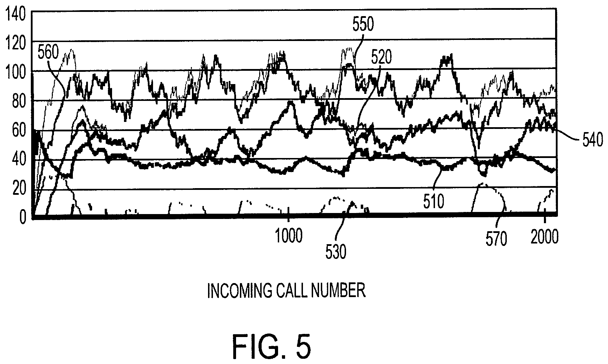

Simulations have shown that the above method is effective in various loading conditions and various ratios between the number of AQLIC capable mobile terminals and the number of non-AQLIC capable mobile terminals. In Figures 5-8, for each call arrival, statistics for Walsh/QoF code usage are illustrated in the graphs. Thus, x-axis represents an incoming call number, and on y-axis are numbers related to the Walsh/QoF code allocation and reservation. The simulations are performed for the same fixed period. The higher the Erlang capacity the more calls are made during the fixed period.

Figure 5 is a graph illustrating evolution of the numbers related to the Walsh/QoF code allocation and reservation simulated using an exemplary embodiment for a heavy loading (Erlang 88), 60% of the user devices being AQLIC capable mobile terminals, the non-AQLIC mobile terminals using RC3. For Erlang 88, about 2077 calls are made in 1800s (i.e., the fixed period). Line 510 represents the number of Wash codes reserved for non-AQLIC mobile terminals, line 520 represents the number of QoF codes in use (i.e., by both AQLIC capable and non-AQLIC capable mobile terminals), line 530 represents the number of QoF codes used by non-AQLIC capable terminals, line 540 represents the number of QoF codes used by AQLIC capable terminals, line 550 represents the number of Walsh codes in use, line 560 represents the number of Walsh codes used by non-AQLIC capable mobile terminals, and line 570 represents the number of Walsh codes used by AQLIC capable mobile terminals. On average, 88.7 Walsh codes are used and 0.88 QoF codes are allocated to non-AQLIC mobile terminals.

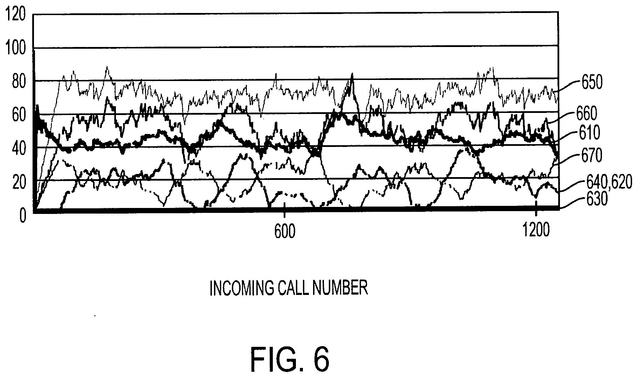

Figure 6 is a graph illustrating evolution of the same numbers related to the code Walsh/QoF allocation and reservation as in Figure 5, simulated using an exemplary embodiment for a light loading (Erlang 48), 60% of the user devices being AQLIC capable mobile terminals, and the non-AQLIC mobile terminals using RC3. For Erlang 48, about 1238 calls are made in 1800s. Line 610 represents the number of Wash codes reserved for non-AQLIC mobile terminals, line 620 represents the number of QoF codes in use, line 630 represents the number of QoF codes used by non-AQLIC capable terminals, line 640 represents the number of QoF codes used by AQLIC capable terminals, line 650 represents the number of Walsh codes in use, line 660 represents the number of Walsh codes used by non-AQLIC capable mobile terminals, and line 670 represents the number of Walsh codes used by AQLIC capable mobile terminals. On average, 69.97 Walsh codes are used and 0 QoF codes are allocated to non-AQLIC mobile terminals (line 630 is the x-axis, and line 640 overlaps line 620).

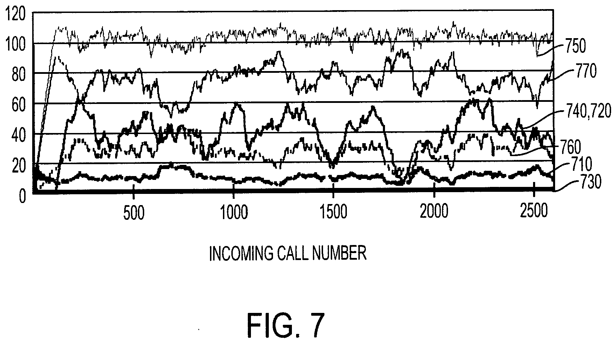

Figure 7 is a graph illustrating evolution of the same numbers related to the Walsh/Qof code allocation and reservation as in Figures 5 and 6, simulated using an exemplary embodiment for a heavy loading (Erlang 108), 90% of the user devices being AQLIC capable mobile terminals, and the non-AQLIC mobile terminals using RC3. For Erlang 108, about 2576 calls are made in 1800s. Line 710 represents the number of Wash codes reserved for non-AQLIC mobile terminals, line 720 represents the number of QoF codes in use, line 730 represents the number of QoF codes used by non-AQLIC capable terminals, line 740 represents the number of QoF codes used by AQLIC capable terminals, line 750 represents the number of Walsh codes in use, line 760 represents the number of Walsh codes used by non-AQLIC capable mobile terminals, and line 770 represents the number of Walsh codes used by AQLIC capable mobile terminals. On average, 100.8 Walsh codes are used and 0 QoF codes are allocated to non-AQLIC mobile terminals (line 730 is the x-axis, and line 740 overlaps line 720).

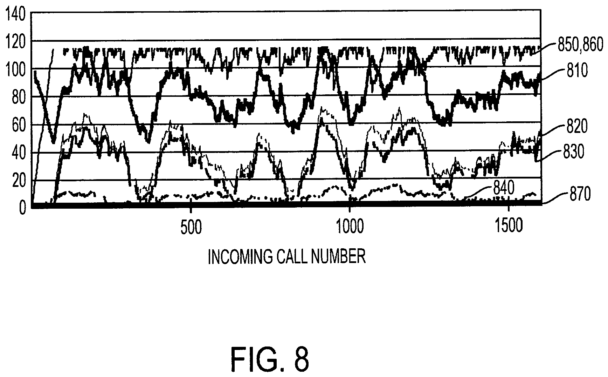

Figure 8 is a graph illustrating evolution of the same numbers related to the Walsh/Qof code allocation and simulation as in Figures 5-7, simulated for a heavy loading (Erlang 68), 10% of the user devices being AQLIC capable mobile terminals, and the non-AQLIC mobile terminals using RC3. For Erlang 68, about 1631 calls are made in 1800s. Line 810 represents the number of Wash codes reserved for non-AQLIC mobile terminals, line 820 represents the number of QoF codes in use, line 830 represents the number of QoF codes used by non-AQLIC capable terminals, line 840 represents the number of QoF codes used by AQLIC capable terminals, line 850 represents the number of Walsh codes in use, line 860 represents the number of Walsh codes used by non-AQLIC capable mobile terminals, and line 870 represents the number of Walsh codes used by AQLIC capable mobile terminals. On average, 106.89 Walsh codes are used, 31.02 QoF codes are allocated to non-AQLIC capable mobile terminals and 0 Walsh codes are allocated to AQLIC capable mobile terminals (line 870 is the x-axis, and line 860 overlaps line 850).

The disclosed exemplary embodiments provide methods, devices and computer readable media storing executable codes for allocating codes to user devices having different capabilities of suppressing unintentional interferences from a signal extracted when using a quasi-orthogonal code. It should be understood that this description is not intended to limit the invention which is defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

The exemplary embodiments may take the form of an entirely hardware embodiment or an embodiment combining hardware and software aspects. Further, the exemplary embodiments may take the form of a computer program product stored on a computer-readable storage medium having computer-readable instructions embodied in the medium. Any suitable computer readable medium may be utilized including hard disks, CD-ROMS, digital versatile disc (DVD), optical storage devices, or
magnetic storage devices such a floppy disk or magnetic tape. Other non-limiting examples of computer readable media include flash-type memories or other known memories.

Although the features and elements of the present exemplary embodiments are described in the embodiments in particular combinations, each feature or element can be used alone without the other features and elements of the embodiments or in various combinations with or without other features and elements disclosed herein. The methods or flow charts provided in the present application may be implemented in a computer program, software, or firmware tangibly embodied in a computer-readable storage medium for execution by a specifically programmed computer or processor.

## Claims

1. A method (200) for allocating orthogonal codes and quasi-orthogonal codes to first user devices and second user devices to enable extracting an intended signal among a plurality of signals multiplexed over the same physical channel, the method comprising:
determining (S210) a threshold number of orthogonal codes to be reserved for allocation to first user devices, based on (i) a number of orthogonal codes usable for allocating, (ii) a usage of the orthogonal codes, and (iii) an average penetration of first user devices, wherein the first user devices are non-Advanced Quasi-Linear Interference Cancelation, non-AQLIC, capable mobiles and the second user devices are Advanced Quasi-Linear Interference Cancelation, AQLIC, capable mobiles;
if a number of available orthogonal codes is larger than the threshold number (S220), allocating (S230) an orthogonal code to a non-AQLIC capable mobile or an AQLIC capable mobile that requests a connection; and
if the number of available orthogonal codes is not larger than the threshold number (S220), allocating (S250) an orthogonal code if a non-AQLIC capable mobile requests a connection (S240) and there is an orthogonal code currently not allocated, and allocating (S260) a quasi-orthogonal code to an AQLIC capable mobile that requests a connection.

2. The method of claim 1, further comprising:
allocating orthogonal codes to control channels.

3. The method of claim 1, wherein the orthogonal codes are Walsh codes and the quasi-orthogonal codes are quasi-orthogonal functional (QoF) Walsh codes.

4. The method of claim 1, wherein the determining of the threshold number is performed each time a non-AQLIC capable mobile or an AQLIC capable mobile requests a connection.

5. The method of claim 4, wherein the average penetration of non-AQLIC capable mobiles is a weighted average of (i) a current penetration of non-AQLIC capable mobiles and (ii) a previous average penetration of non-AQLIC capable mobiles.

6. The method of claim 5, wherein, in the weighted average, the current penetration of non-AQLIC capable mobiles is weighted with 0.67 and the previous average penetration of non-AQLIC capable mobiles is weighted 0.33.

7. The method of claim 5, wherein,
the current penetration of non-AQLIC capable mobiles is a ratio between (i) a sum of a number of orthogonal codes currently used by non-AQLIC capable mobiles and a number of quasi-orthogonal codes currently used by non-AQLIC capable mobiles, and (ii) a total number of orthogonal codes and quasi-orthogonal codes currently used,
the previous average penetration of non-AQLIC capable mobiles is the average penetration of non-AQLIC capable mobiles calculated when previously a non-AQLIC capable mobile or an AQLIC capable mobile has requested a connection, and
if previously no non-AQLIC capable mobile or AQLIC capable mobile has previously requested a connection, the average penetration of non-AQLIC capable mobiles is equal to the current penetration of non-AQLIC capable mobiles.

8. The method of claim 5, wherein the usage of orthogonal codes is a ratio of (i) a number of orthogonal codes currently allocated to non-AQLIC capable mobiles and to AQLIC capable mobiles, and (ii) a total number of orthogonal codes usable for allocation.

9. The method of claim 5, wherein the threshold number is at least a product of (i) a total number of orthogonal codes usable for allocation, (ii) a difference between 1 and the usage of the orthogonal codes, and (iii) the average penetration of non-AQLIC capable mobiles.

10. The method of claim 9, wherein the threshold number is a sum of the product and a variance, the method further comprising:
calculating the variance as a fraction of a product of (i) the total number of orthogonal codes usable for allocation, (ii) the usage of orthogonal codes and (iii) the average penetration of non-AQLIC capable mobiles.

11. The method of claim 10, wherein the fraction is a half.

12. A computer readable medium storing executable codes which, when executed on a computer, perform a method for allocating orthogonal codes and quasi-orthogonal codes to first and second user devices to enable extracting an intended signal among a plurality of signals multiplexed over the same physical channel, the method comprising:
determining (S210) a threshold number of orthogonal codes to be reserved for allocation to first user devices, based on (i) a number of orthogonal codes usable for allocating, (ii) a usage of the orthogonal codes, and (iii) an average penetration of first user devices, wherein the first user devices are non-Advanced Quasi-Linear Interference Cancelation, non-AQLIC, capable mobiles and the second user devices are Advanced Quasi-Linear Interference Cancelation, AQLIC, capable mobiles;
if a number of available orthogonal codes is larger than the threshold number (S220), allocating (S230) orthogonal codes to a non-AQLIC capable mobile or a AQLIC capable mobile that requests a connection; and
if the number of available orthogonal codes is smaller than or equal to the threshold number (S220), allocating (S250) an orthogonal code if a non-AQLIC capable mobile requests a connection (S240) and there is an orthogonal code currently not allocated, and allocating (S260) a quasi-orthogonal code to an AQLIC capable mobile that requests a connection.

13. A base station (110, 120, 300) connectable to first user devices and second user devices (111,112,121,122) configured to extract an intended signal among a plurality of signals multiplexed over the same physical channel, wherein the first user devices are non-Advanced Quasi-Linear Interference Cancelation, non-AQLIC, capable mobiles and the second user devices are Advanced Quasi-Linear Interference Cancelation, AQLIC, capable mobiles, the base station (300) comprising:
an interface (310) configured to receive a connection request from one of the non-AQLIC capable mobiles or the AQLIC capable mobiles, to send a signal upon receiving the connection request, to receive an allocated orthogonal code or quasi-orthogonal code, and to transmit the allocated orthogonal code or quasi-orthogonal code to the one of the non-AQLIC capable mobiles or the AQLIC capable mobiles; and
a processing unit (320) configured
to receive the signal from the interface,
to determine a threshold number of orthogonal codes to be reserved for allocation to non-AQLIC capable mobiles, based on (i) a number of orthogonal codes currently usable for allocating, (ii) a usage of the orthogonal codes, and (iii) an average penetration of non-AQLIC capable mobiles,
to allocate an orthogonal code to the one of the non-AQLIC capable mobiles and AQLIC capable mobiles that sent the connection request if a number of available orthogonal codes is larger than the threshold number,
to allocate an orthogonal code to the one of the non-AQLIC capable mobiles and AQLIC capable mobiles that sent the connection request, if the one of the non-AQLIC capable mobiles and AQLIC capable mobiles that sent the connection request is a non-AQLIC capable mobile, there is an orthogonal code currently not allocated, and the number of available orthogonal codes is smaller than or equal to the threshold number,
to allocate a quasi-orthogonal code to the one of the non-AQLIC capable mobiles and AQLIC capable mobiles that sent the connection request, if the one of the non-AQLIC capable mobiles and AQLIC capable mobiles that sent the connection request is an AQLIC capable mobile and the number of available orthogonal codes is smaller than or equal to the threshold number, and
to transmit the allocated orthogonal code or quasi-orthogonal code to the interface.

14. A base station controller (130, 400) connected to at least one base station (110, 120) serving first user devices and second user devices (111,112, 121, 122) configured to extract an intended signal among a plurality of signals multiplexed over the same physical channel, wherein the first user devices are non-Advanced Quasi-Linear Interference Cancelation, non-AQLIC, capable mobiles and the second user devices are Advanced Quasi-Linear Interference Cancelation, AQLIC, capable mobiles, the base station controller (400) comprising:
an interface (410) configured to receive information about a connection request received by the at least one base station from one of the non-AQLIC capable mobiles or the AQLIC capable mobiles, to send a signal related to the at least one base station upon receiving the information, to receive an allocated orthogonal code or quasi-orthogonal code related to the at least one base station, and to transmit the allocated orthogonal code or a quasi-orthogonal code to the at least one base station for the one of the non-AQLIC capable mobiles or the AQLIC capable mobiles; and
a processing unit (420) configured
to receive the signal related to the at least one base station, from the interface,
to determine, relative to the at least one base station, a threshold number of orthogonal codes to be reserved for allocation to non-AQLIC capable mobiles, based on (i) a number of orthogonal codes currently usable for allocating, (ii) a usage of the orthogonal codes, and (iii) an average penetration of non-AQLIC capable mobiles;
to allocate an orthogonal code for the one of the non-AQLIC capable mobiles and AQLIC capable mobiles that sent the connection request if a number of available orthogonal codes is larger than the threshold number;
to allocate an orthogonal code for the one of the non-AQLIC capable mobiles and AQLIC capable mobiles that sent the connection request, if the one of the non-AQLIC capable mobiles and AQLIC capable mobiles that sent the connection request is a non-AQLIC capable mobile, there is an orthogonal code currently not allocated and the number of available orthogonal codes is smaller than or equal to the threshold number;
to allocate a quasi-orthogonal code for the one of the non-AQLIC capable mobiles and AQLIC capable mobiles that sent the connection request, if the one of the non-AQLIC capable mobiles and AQLIC capable mobiles that sent the connection request is an AQLIC capable mobile and the number of available orthogonal codes is smaller than or equal to the threshold number, and
to transmit the allocated orthogonal code or quasi-orthogonal code to the interface for being transmitted to the at least one base station.

## Patentansprüche

1. Verfahren (200) zur Zuweisung von orthogonalen Codes und quasi-orthogonalen Codes zu ersten Benutzervorrichtungen und zweiten Benutzervorrichtungen, um Extrahieren eines vorgesehenen Signals unter einer Mehrzahl von über den gleichen physikalischen Kanal gemultiplexten Signalen zu ermöglichen, wobei das Verfahren umfasst:
Bestimmen (S210) einer Schwellenanzahl von orthogonalen Codes, die zur Zuweisung zu ersten Benutzervorrichtungen reserviert werden sollen, basierend auf (i) einer Anzahl von orthogonalen Codes, die zur Zuweisung verwendbar sind, (ii) einer Nutzung der orthogonalen Codes und (iii) einer mittleren Penetration erster Benutzervorrichtungen, wobei die ersten Benutzervorrichtungen nicht-AQLIC (non-Advanced Quasi-Linear Interference Cancelation)-fähige Mobileinheiten sind, und die zweiten Benutzervorrichtungen AQLIC (Advanced Quasi-Linear Interference Cancelation)-fähige Mobileinheiten sind;
Zuweisen (S230), wenn eine Anzahl von verfügbaren orthogonalen Codes größer als die Schwellenanzahl ist (S220), eines orthogonalen Codes zu einer nicht-AQLIC-fähigen Mobileinheit oder einer AQLIC-fähigen Mobileinheit, die eine Verbindung anfordert; und
Zuweisen (S250), wenn die Anzahl von verfügbaren orthogonalen Codes nicht größer als die Schwellenanzahl ist (S220), eines orthogonalen Codes, falls eine nicht-AQLIC-fähige Mobileinheit eine Verbindung anfordert (S240) und gegenwärtig kein orthogonaler Code zugewiesen ist, und Zuweisen (S260) eines quasi-orthogonalen Codes zu einer AQLIC-fähigen Mobileinheit, welche die Verbindung anfordert.

2. Verfahren nach Anspruch 1, ferner umfassend:
Zuweisen von orthogonalen Codes zu Steuerkanälen.

3. Verfahren nach Anspruch 1, wobei die orthogonalen Codes Walsh-Codes sind, und die quasi-orthogonalen Codes quasi-orthogonale funktionelle (QoF)-Walsh-Codes sind.

4. Verfahren nach Anspruch 1, wobei das Bestimmen der Schwellenanzahl jedes Mal durchgeführt wird, wenn eine nicht-AQLIC-fähige Mobileinheit oder eine AQLIC-fähige Mobileinheit eine Verbindung anfordert.

5. Verfahren nach Anspruch 4, wobei die mittlere Penetration von nicht-AQLIC-fähigen Mobileinheiten ein gewichtetes Mittel (i) einer aktuellen Penetration von nicht-AQLIC-fähigen Mobileinheiten und (ii) einer früheren mittleren Penetration von nicht-AQLIC-fähigen Mobileinheiten ist.

6. Verfahren nach Anspruch 5, wobei im gewichteten Mittel die aktuelle Penetration von nicht-AQLIC-fähigen Mobileinheiten mit 0,67 gewichtet wird, und die frühere Penetration von nicht-AQLIC-fähigen Mobileinheiten mit 0,33 gewichtet wird.

7. Verfahren nach Anspruch 5, wobei
die aktuelle Penetration von nicht-AQLIC-fähigen Mobileinheiten ein Verhältnis zwischen (i) einer Summe einer Anzahl von orthogonalen Codes, die gegenwärtig von nicht-AQLIC-fähigen Mobileinheiten verwendet werden, und einer Anzahl von quasi-orthogonalen Codes, die gegenwärtig von nicht-AQLIC-fähigen Mobileinheiten verwendet werden, und (ii) einer Gesamtanzahl von orthogonalen Codes und quasi-orthogonalen Code ist, die gegenwärtig verwendet werden,
die frühere mittlere Penetration von nicht-AQLIC-fähigen Mobileinheiten die mittlere Penetration von nicht-AQLIC-Mobileinheiten ist, die berechnet wird, wenn eine nicht-AQLIC-fähige Mobileinheit oder eine AQLIC-fähige Mobileinheit früher eine Verbindung angefordert hat, und
die mittlere Penetration von nicht-AQLIC-fähigen Mobileinheiten gleich der aktuellen Penetration von nicht-AQLIC-fähigen Mobileinheiten ist, wenn weder eine nicht-AQLIC-fähige Mobileinheit noch eine AQLIC-fähige Mobileinheit früher eine Verbindung angefordert hat,

8. Verfahren nach Anspruch 5, wobei die Nutzung von orthogonalen Codes ein Verhältnis (i) einer Anzahl von orthogonalen Codes, die zu nicht-AQLIC-fähigen Mobileinheiten und zu AQLIC-fähigen Mobileinheiten zugewiesen sind, und (ii) einer Gesamtanzahl von orthogonalen Codes ist, die zur Zuweisung verwendbar sind.

9. Verfahren nach Anspruch 5, wobei die Schwellenanzahl mindestens ein Produkt (i) einer Gesamtanzahl von orthogonalen Codes, die zur Zuweisung verwendbar sind, (ii) einer Differenz zwischen 1 und der Nutzung der orthogonalen Codes und (ii) der mittleren Penetration von nicht-AQLIC-fähigen Mobileinheiten ist.

10. Verfahren nach Anspruch 9, wobei die Schwellenanzahl eine Summe des Produkts und einer Varianz ist, und das Verfahren ferner umfasst:
Berechnen der Varianz als eine Fraktion eines Produkts (i) der Gesamtanzahl von orthogonalen Codes, die zur Zuweisung verwendbar sind, (ii) der Nutzung von orthogonalen Codes und (ii) der mittleren Penetration von nicht-AQLIC-fähigen Mobileinheiten.

11. Verfahren nach Anspruch 10, wobei die Fraktion eine Hälfte ist.

12. Computerlesbares Medium zum Speichern von ausführbaren Codes, die bei Ausführung auf einem Computer ein Verfahren zur Zuweisung von orthogonalen Codes und quasi-orthogonalen Codes zu ersten Benutzervorrichtungen und zweiten Benutzervorrichtungen zum Ermöglichen des Extrahierens eines vorgesehenen Signals unter einer Mehrzahl von über den gleichen physikalischen Kanal gemultiplexten Signalen durchführen, wobei das Verfahren umfasst:
Bestimmen (S210) einer Schwellenanzahl von orthogonalen Codes, die zur Zuweisung zu ersten Benutzervorrichtungen reserviert werden sollen, basierend auf (i) einer Anzahl von orthogonalen Codes, die zur Zuweisung verwendbar sind, (ii) einer Nutzung der orthogonalen Codes und (iii) einer mittleren Penetration erster Benutzervorrichtungen, wobei die ersten Benutzervorrichtungen nicht-AQLIC (non-Advanced Quasi-Linear Interference Cancelation)-fähige Mobileinheiten sind, und die zweiten Benutzervorrichtungen AQLIC (Advanced Quasi-Linear Interference Cancelation)-fähige Mobileinheiten sind;
Zuweisen (S230), wenn eine Anzahl von verfügbaren orthogonalen Codes größer als die Schwellenanzahl ist (S220), von orthogonalen Codes zu einer nicht-AQLIC-fähigen Mobileinheit oder einer AQLIC-fähigen Mobileinheit, die eine Verbindung anfordert; und
Zuweisen (S250), wenn die Anzahl von verfügbaren orthogonalen Codes kleiner als oder gleich wie die Schwellenanzahl ist (S220), eines orthogonalen Codes, falls eine nicht-AQLIC-fähige Mobileinheit eine Verbindung anfordert (S240) und gegenwärtig kein orthogonaler Code zugewiesen ist, und Zuweisen (S260) eines quasi-orthogonalen Codes zu einer AQLIC-fähigen Mobileinheit, die eine Verbindung anfordert.

13. Basisstation (110, 120, 300), die mit ersten und zweiten Benutzervorrichtungen (111,112,121,122) verbunden werden kann, die zum Extrahieren eines vorgesehenen Signals unter einer Mehrzahl von über den gleichen physikalischen Kanal gemultiplexten Signalen konfiguriert sind, wobei die ersten Benutzervorrichtungen nicht-AQLIC (non-Advanced Quasi-Linear Interference Cancelation)-fähige Mobileinheiten sind, und die zweiten Benutzervorrichtungen AQLIC (Advanced Quasi-Linear Interference Cancelation)-fähige Mobileinheiten sind, und die Basisstation (300) umfasst:
eine Schnittstelle (310), die so konfiguriert ist, dass sie eine Verbindungsanforderung von einer der nicht-AQLIC-fähigen Mobileinheiten oder der AQLIC-fähigen Mobileinheiten empfängt, bei Empfang der Verbindungsanforderung ein Signal sendet, einen zugewiesenen orthogonalen Code oder quasi-orthogonalen Code empfängt, und den zugewiesenen orthogonalen Code oder quasi-orthogonalen Code an die eine der nicht-AQLIC-fähigen Mobileinheiten oder der AQLIC-fähigen Mobileinheiten sendet; und
eine Verarbeitungseinheit (320), die konfiguriert ist zum:
Empfangen des Signals von der Schnittstelle,
Bestimmen einer Schwellenanzahl von orthogonalen Codes, die zur Zuweisung zu nicht-AQLIC-fähigen Mobileinheiten reserviert werden sollen, basierend auf (i) einer Anzahl von orthogonalen Codes, die gegenwärtig zur Zuweisung verwendbar sind, (ii) einer Nutzung der orthogonalen Codes und (iii) einer mittleren Penetration von nicht-AQLIC-fähigen Mobileinheiten,
Zuweisen eines orthogonalen Codes zu der einen der nicht-AQLIC-fähigen Mobileinheiten und AQLIC-fähigen Mobileinheiten, welche die Verbindungsanforderung gesendet hat, wenn eine Anzahl von verfügbaren orthogonalen Codes größer als die Schwellenanzahl ist, Zuweisen eines orthogonalen Codes zu der einen der nicht-AQLIC-fähigen Mobileinheiten und AQLIC-fähigen Mobileinheiten, welche die Verbindungsanforderung gesendet hat, wenn die eine der nicht-AQLIC-fähigen Mobileinheiten und AQLIC-fähigen Mobileinheiten, welche die Verbindungsanforderung gesendet hat, eine nicht-AQLIC-fähige Mobileinheit ist, gegenwärtig kein orthogonaler Code zugewiesen ist, und die Anzahl von verfügbaren orthogonalen Codes kleiner als oder gleich wie die Schwellenanzahl ist,
Zuweisen eines orthogonalen Codes zu der einen der nicht-AQLIC-fähigen Mobileinheiten und AQLIC-fähigen Mobileinheiten, welche die Verbindungsanforderung gesendet hat, wenn die eine der nicht-AQLIC-fähigen Mobileinheiten und AQLIC-fähigen Mobileinheiten, welche die Verbindungsanforderung gesendet hat, eine AQLIC-fähige Mobileinheit ist, und die Anzahl von verfügbaren orthogonalen Codes kleiner als oder gleich wie die Schwellenanzahl ist, und
Senden des zugewiesenen orthogonalen Codes oder quasi-orthogonalen Codes an die Schnittstelle.

14. Basisstationssteuerung (130, 400), die mit mindestens einer Basisstation (110, 120) verbunden ist, welche erste und zweite Benutzervorrichtungen (111, 112, 121, 122) versorgt, die zum Extrahieren eines vorgesehenen Signals unter einer Mehrzahl von über den gleichen physikalischen Kanal gemultiplexten Signalen konfiguriert sind, wobei die ersten Benutzervorrichtungen nicht-AQLIC (non-Advanced Quasi-Linear Interference Cancelation)-fähige Mobileinheiten sind, und die zweiten Benutzervorrichtungen AQLIC (Advanced Quasi-Linear Interference Cancelation)-fähige Mobileinheiten sind, und die Basisstationssteuerung (400) umfasst:
eine Schnittstelle (410), die so konfiguriert ist, dass sie Informationen über eine Verbindungsanforderung empfängt, die durch die mindestens eine Basisstation von einer der nicht-AQLIC-fähigen Mobileinheiten oder der AQLIC-fähigen Mobileinheiten empfangen wird, bei Empfang der Informationen ein mit der mindestens einen Basisstation in Beziehung stehendes Signal sendet, einen zugewiesenen orthogonalen Code oder quasi-orthogonalen Code empfängt, der mit der mindestens einen Basisstation in Beziehung steht, und den zugewiesenen orthogonalen Code oder quasi-orthogonalen Code, der mit der mindestens einen Basisstation in Beziehung steht, für die eine der nicht-AQLIC-fähigen Mobileinheiten oder der AQLIC-fähigen Mobileinheiten sendet; und
eine Verarbeitungseinheit (420), die konfiguriert ist zum:
Empfangen des Signals, das mit der mindestens einen Basisstation in Beziehung steht, von der Schnittstelle,
Bestimmen in Bezug auf die mindestens eine Basisstation einer Schwellenanzahl von orthogonalen Codes, die zur Zuweisung zu nicht-AQLIC-fähigen Mobileinheiten reserviert werden sollen, basierend auf (i) einer Anzahl von orthogonalen Codes, die gegenwärtig zur Zuweisung verwendbar sind, (ii) einer Nutzung der orthogonalen Codes und (iii) einer mittleren Penetration von nicht-AQLIC-fähigen Mobileinheiten;
Zuweisen eines orthogonalen Codes für die eine der nicht-AQLIC-fähigen Mobileinheiten und AQLIC-fähigen Mobileinheiten, welche die Verbindungsanforderung gesendet hat, wenn eine Anzahl von verfügbaren orthogonalen Codes größer als die Schwellenanzahl ist, Zuweisen eines orthogonalen Codes für die eine der nicht-AQLIC-fähigen Mobileinheiten und AQLIC-fähigen Mobileinheiten, welche die Verbindungsanforderung gesendet hat, wenn die eine der nicht-AQLIC-fähigen Mobileinheiten und AQLIC-fähigen Mobileinheiten, welche die Verbindungsanforderung gesendet hat, eine nicht-AQLIC-fähige Mobileinheit ist, gegenwärtig kein orthogonaler Code zugewiesen ist und die Anzahl von verfügbaren orthogonalen Codes kleiner als oder gleich wie die Schwellenanzahl ist,
Zuweisen eines orthogonalen Codes für die eine der nicht-AQLIC-fähigen Mobileinheiten und AQLIC-fähigen Mobileinheiten, welche die Verbindungsanforderung gesendet hat, wenn die eine der nicht-AQLIC-fähigen Mobileinheiten und AQLIC-fähigen Mobileinheiten, welche die Verbindungsanforderung gesendet hat, eine AQLIC-fähige Mobileinheit ist, und die Anzahl von verfügbaren orthogonalen Codes kleiner als oder gleich wie die Schwellenanzahl ist, und
Senden des zugewiesenen orthogonalen Codes oder quasi-orthogonalen Codes an die Schnittstelle, um an die mindestens eine Basisstation gesendet zu werden.

## Revendications

1. Procédé (200) d'allocation de codes orthogonaux et de codes quasi-orthogonaux à des premiers dispositifs d'utilisateur et à des deuxièmes dispositifs d'utilisateur pour permettre l'extraction d'un signal prévu parmi une pluralité de signaux multiplexés sur le même canal physique, le procédé comprenant :
la détermination (S210) d'un nombre seuil de codes orthogonaux à réserver pour une allocation à des premiers dispositifs d'utilisateur, sur la base de (i) un nombre de codes orthogonaux utilisables pour une allocation, (ii) une utilisation des codes orthogonaux,
et (iii) une pénétration moyenne de premiers dispositifs d'utilisateur, dans lequel les premiers dispositifs d'utilisateur sont des mobiles capables d'une suppression d'interférence quasi-linéaire non avancée, non-AQLIC, et les deuxièmes dispositifs d'utilisateur sont des mobiles capables d'une suppression d'interférence quasi-linéaire avancée, AQLIC ;
si un nombre de codes orthogonaux disponibles est supérieur au nombre seuil (S220), l'allocation (S230) d'un code orthogonal à un mobile capable non-AQLIC ou à un mobile capable AQLIC qui demande une connexion ; et
si le nombre de codes orthogonaux disponibles n'est pas supérieur au nombre seuil (S220), l'allocation (S250) d'un code orthogonal si un mobile capable non-AQLIC demande une connexion (S240) et il y a un code orthogonal qui n'est pas actuellement alloué, et l'allocation (S260) d'un code quasi-orthogonal à un mobile capable AQLIC qui demande une connexion.

2. Procédé selon la revendication 1, comprenant en outre :
l'allocation de codes orthogonaux à des canaux de commande.

3. Procédé selon la revendication 1, dans lequel les codes orthogonaux sont des codes de Walsh et les codes quasi-orthogonaux sont des codes de Walsh fonctionnels quasi-orthogonaux (QoF).

4. Procédé selon la revendication 1, dans lequel la détermination du nombre seuil est effectuée chaque fois qu'un mobile capable non-AQLIC ou un mobile capable AQLIC demande une connexion.

5. Procédé selon la revendication 4, dans lequel la pénétration moyenne de mobiles capables non-AQLIC est une moyenne pondérée de (i) une pénétration actuelle de mobiles capables non-AQLIC et (ii) une pénétration moyenne précédente de mobiles capables non-AQLIC.

6. Procédé selon la revendication 5, dans lequel, dans la moyenne pondérée, la pénétration actuelle de mobiles capables non-AQLIC est pondérée à 0,67 et la pénétration moyenne précédente de mobiles capables non-AQLIC est pondérée à 0,33.

7. Procédé selon la revendication 5, dans lequel la pénétration actuelle de mobiles capables non-AQLIC est un rapport entre (i) une somme d'un nombre de codes orthogonaux actuellement utilisés par des mobiles capables non-AQLIC et d'un nombre de codes quasi-orthogonaux actuellement utilisés par des mobiles capables non-AQLIC, et (ii) un nombre total de codes orthogonaux et de codes quasi-orthogonaux actuellement utilisés,
la pénétration moyenne précédente de mobiles capables non-AQLIC est la pénétration moyenne de mobiles capables non-AQLIC calculée lorsqu'un mobile capable non-AQLIC ou un mobile capable AQLIC a précédemment demandé une connexion, et
si aucun mobile capable non-AQLIC ou aucun mobile capable AQLIC n'a précédemment demandé une connexion, la pénétration moyenne de mobiles capables non-AQLIC est égale à la pénétration actuelle de mobiles capables non-AQLIC.

8. Procédé selon la revendication 5, dans lequel l'utilisation de codes orthogonaux est un rapport de (i) un nombre de codes orthogonaux actuellement alloués à des mobiles capables non-AQLIC et à des mobiles capables AQLIC, et (ii) un nombre total de codes orthogonaux utilisables pour une allocation

9. Procédé selon la revendication 5, dans lequel le nombre seuil est au moins un produit de (i) un nombre total de codes orthogonaux utilisables pour une allocation, (ii) une différence entre 1 et l'utilisation des codes orthogonaux, et (iii) la pénétration moyenne de mobiles capables non-AQLIC.

10. Procédé selon la revendication 9, dans lequel le nombre seuil est une somme du produit et d'une variance, le procédé comprenant en outre :
le calcul de la variance en tant qu'une fraction d'un produit de (i) le nombre total de codes orthogonaux utilisables pour une allocation, (ii) l'utilisation de codes orthogonaux et (iii) la pénétration moyenne de mobiles capables non-AQLIC.

11. Procédé selon la revendication 10, dans lequel la fraction est une moitié.

12. Support lisible par ordinateur mémorisant des codes exécutables qui, lorsqu'ils sont exécutés sur un ordinateur, effectuent un procédé d'allocation de codes orthogonaux et de codes quasi-orthogonaux à des premiers et deuxièmes dispositifs d'utilisateur pour permettre l'extraction d'un signal prévu parmi une pluralité de signaux multiplexés sur le même canal physique, le procédé comprenant :
la détermination (S210) d'un nombre seuil de codes orthogonaux à réserver pour une allocation à des premiers dispositifs d'utilisateur, sur la base de (i) un nombre de codes orthogonaux utilisables pour une allocation, (ii) une utilisation des codes orthogonaux, et (iii) une pénétration moyenne de premiers dispositifs d'utilisateur, dans lequel les premiers dispositifs d'utilisateur sont des mobiles capables d'une suppression d'interférence quasi-linéaire non avancée, non-AQLIC, et les deuxièmes dispositifs d'utilisateur sont des mobiles capables d'une suppression d'interférence quasi-linéaire avancée, AQLIC ;
si un nombre de codes orthogonaux disponibles est supérieur au nombre seuil (S220), l'allocation (S230) de codes orthogonaux à un mobile capable non-AQLIC ou un mobile capable AQLIC qui demande une connexion ; et
si le nombre de codes orthogonaux disponibles est inférieur ou égal au nombre seuil (S220), l'allocation (S250) d'un code orthogonal si un mobile capable non-AQLIC demande une connexion (S240) et il y a un code orthogonal qui n'est pas actuellement alloué, et l'allocation (S260) d'un code quasi-orthogonal à un mobile capable AQLIC qui demande une connexion.

13. Station de base (110, 120, 300) connectable à des premiers dispositifs d'utilisateur et à des deuxièmes dispositifs d'utilisateur (111, 112, 121, 122) configurée pour l'extraction d'un signal prévu parmi une pluralité de signaux multiplexés sur le même canal physique, dans laquelle les premiers dispositifs d'utilisateur sont des mobiles capables d'une suppression d'interférence quasi-linéaire non avancée, non-AQLIC, et les deuxièmes dispositifs d'utilisateur sont des mobiles capables d'une suppression d'interférence quasi-linéaire avancée, AQLIC, la station de base (300) comprenant :
une interface (310) configurée pour la réception d'une demande de connexion en provenance de l'un des mobiles capables non-AQLIC ou des mobiles capables AQLIC, l'envoi d'un signal à la réception de la demande de connexion, la réception d'un code orthogonal ou d'un code quasi-orthogonal alloué, et la transmission du code orthogonal ou du code quasi-orthogonal alloué à destination de l'un des mobiles capables non-AQLIC ou des mobiles capables AQLIC ; et
une unité de traitement (320) configurée pour :
la réception du signal en provenance de l'interface,
la détermination d'un nombre seuil de codes orthogonaux à réserver pour une allocation à des mobiles capables non-AQLIC sur la base de (i) un nombre de codes orthogonaux actuellement utilisables pour une allocation, (ii) une utilisation des codes orthogonaux, et (iii) une pénétration moyenne de mobiles capables non-AQLIC,
l'allocation d'un code orthogonal à l'un des mobiles capables non-AQLIC et des mobiles capables AQLIC ayant envoyé la demande de connexion si un nombre de codes orthogonaux disponibles est supérieur au nombre seuil,
l'allocation d'un code orthogonal à l'un des mobiles capables non-AQLIC et des mobiles capables AQLIC ayant envoyé la demande de connexion, si l'un des mobiles capables non-AQLIC et des mobiles capables AQLIC ayant envoyé la demande de connexion est un mobile capable non-AQLIC, il y a un code orthogonal qui n'est pas actuellement alloué, et le nombre de codes orthogonaux disponibles est inférieur ou égal au nombre seuil,
l'allocation d'un code quasi-orthogonal à l'un des mobiles capables non-AQLIC et des mobiles capables AQLIC ayant envoyé la demande de connexion, si l'un des mobiles capables non-AQLIC et des mobiles capables AQLIC ayant envoyé la demande de connexion est un mobile capable AQLIC et le nombre de codes orthogonaux disponibles est inférieur ou égal au nombre seuil, et
la transmission du code orthogonal ou du code quasi-orthogonal alloué à destination de l'interface.

14. Organe de commande de station de base (130, 400) relié à au moins une station de base (110, 120) desservant des premiers dispositifs d'utilisateur et des deuxièmes dispositifs d'utilisateur (111, 112, 121, 122) configurée pour l'extraction d'un signal prévu parmi une pluralité de signaux multiplexés sur le même canal physique, dans lequel les premiers dispositifs d'utilisateur sont des mobiles capables d'une suppression d'interférence quasi-linéaire non avancée, non-AQLIC, et les deuxièmes dispositifs d'utilisateur sont des mobiles capables d'une suppression d'interférence quasi-linéaire avancée, AQLIC, l'organe de commande de station de base (400) comprenant :
une interface (410) configurée pour la réception d'informations relatives à une demande de connexion reçue par l'au moins une station de base en provenance de l'un des mobiles capables non-AQLIC ou des mobiles capables AQLIC, l'envoi d'un signal relatif à l'au moins une station de base à la réception des informations, la réception d'un code orthogonal ou d'un code quasi-orthogonal alloué relatif à l'au moins une station de base, et la transmission du code orthogonal ou du code quasi-orthogonal alloué à destination de l'au moins une station de base pour l'un des mobiles capables non-AQLIC ou des mobiles capables AQLIC ; et
une unité de traitement (420) configurée pour :
la réception du signal relatif à l'au moins une station de base, en provenance de l'interface,
la détermination, en ce qui concerne l'au moins une station de base, d'un nombre seuil de codes orthogonaux à réserver pour une allocation à des mobiles capables non-AQLIC sur la base de (i) un nombre de codes orthogonaux actuellement utilisables pour une allocation, (ii) une utilisation des codes orthogonaux, et (iii) une pénétration moyenne de mobiles capables non-AQLIC,
l'allocation d'un code orthogonal à l'un des mobiles capables non-AQLIC et des mobiles capables AQLIC ayant envoyé la demande de connexion si un nombre de codes orthogonaux disponibles est supérieur au nombre seuil,
l'allocation d'un code orthogonal à l'un des mobiles capables non-AQLIC et des mobiles capables AQLIC ayant envoyé la demande de connexion, si l'un des mobiles capables non-AQLIC et des mobiles capables AQLIC ayant envoyé la demande de connexion est un mobile capable non-AQLIC, il y a un code orthogonal qui n'est pas actuellement alloué, et le nombre de codes orthogonaux disponibles est inférieur ou égal au nombre seuil,
l'allocation d'un code quasi-orthogonal à l'un des mobiles capables non-AQLIC et des mobiles capables AQLIC ayant envoyé la demande de connexion, si l'un des mobiles capables non-AQLIC et des mobiles capables AQLIC ayant envoyé la demande de connexion est un mobile capable AQLIC et le nombre de codes orthogonaux disponibles est inférieur ou égal au nombre seuil, et
la transmission du code orthogonal ou du code quasi-orthogonal alloué à destination de l'interface pour une transmission à destination de l'au moins une station de base.
